# EUROPEAN PATENT APPLICATION

(11) **EP 1 870 751 A1**
(43) Date of publication of application: **26.12.2007**
(21) Application number: 06076294.5
(22) Date of filing: 23.06.2006
(51) Int. Cl.: G02B 7/00

(54) **Mount for positioning an optical element**

(71) Applicant: Nederlandse Organisatie voor Toegepast-Natuurwetenschappelijk Onderzoek TNO, 2628 VK Delft (NL)
(72) Inventor: van Haendel, Rob Peter Albert, 2624 AW Delft (NL); Rosielle, Petrus Carolus Johannes Nicolaas, 5505 AV Veldhoven (NL)
(74) Representative: van Loon, C.J.J.

(57) **Abstract**

Mount (4) for positioning an optical element having one or more optically active surfaces, such as a mirror segment having a reflective surface. The mount comprises a main frame and a plurality of struts (32), each of the struts being configured to support the optical element at a support contact (26) and to restrict displacement of the support contact perpendicular to the optically active surface. The mount comprises at least one restrictive element (16), wherein the at least one restrictive element is mechanically coupled to a said strut near the support contact and wherein each of the at least one restrictive element is arranged to restrict displacement of the optical element with respect to the main frame in a direction substantially parallel to the optically active surface and to allow for displacement of the optical element with respect to the main frame in another direction substantially parallel to the optically active surface.

## Description

The invention relates to a mount for positioning an optical element, having one or more optically active surfaces, such as a mirror segment having a reflective surface.

Furthermore, the invention relates to an optical system comprising a main frame and such a mount.

Such mounts are often used in telescopes for positioning mirror segments having a reflective surface. The mirror segments are positioned to form a mirror which also has to be positioned with respect to a main frame comprised in the telescope. Accurate positioning of the mirror segments in a translational direction perpendicular to the reflective surface and a rotational positioning of the mirror segments with respect to an axis parallel to the reflective surface are important to the imaging quality of the mirror. Good support of the mirror segments is also desirable in the other directions in order to prevent vibrations in these directions to interfere with the proper functioning of the optical system as a whole. Good support of the mirror segments is further desirable for maintaining the mirror shape and preventing undesired stress in the mirror created by the mirror segment's pressing against each other.

In order to be able to accurately predetermine the above-mentioned positioning of the mirror segments the mount comprises a main frame and one or more strut frames, each of the strut frames comprising a plurality of struts, each of the struts being configured to support the optical element at a support contact and to restrict displacement of the support contact perpendicular to the optically active surface. The mount may comprise one or more actuators for actuating the strut frames in a longitudinal direction of the struts with respect to the main frame.

Preferably, three or more such strut frames are provided, since this could allow for translational positioning of the optical element perpendicular to the optically active surface, as well as the rotational positioning of the mirror segments with respect to an axis parallel to the reflective surface. The struts restrict any translational displacement of the mirror segment and allow for translation of the mirror segment parallel to the reflective surface and any rotational displacement of the mirror segment with respect to an axis parallel to the reflective surface. Also, such use of struts allows the edges of the mirror segment free of any support in order to allow for the formation of mirrors from a plurality of mirror segments.

A mount is known having a support mechanism centrally mounted on a mirror segment, the mount further comprising several struts for positioning the mirror segment in a longitudinal direction of the struts. The support mechanism restricts displacements in any direction perpendicular thereto.

A disadvantage of such a known mount is that the support mechanism requires separate adjustment of the mirror segment. Such adjustment is effected by a separate actuator.

An object of the present invention is to provide the possibility to overcome the mentioned disadvantage.

This object is achieved by the present invention, wherein the mount comprises at least one restrictive element, wherein the at least one restrictive element is mechanically coupled to a said strut near the support contact and wherein each of the at least one restrictive element is arranged to restrict displacement of the optical element with respect to the main frame in a direction substantially parallel to the optically active surface and to allow for displacement of the optical element with respect to the main frame in another direction substantially parallel to the optically active surface.

Since the at least one restrictive element allows for displacement of the optical element with respect to the main frame, the optical element may at least partially be relieved of the internal stress which would occur if the optical element were restricted in all directions parallel to the optically active surface.

Also, since the mechanical coupling between the at least one restrictive element and the strut is near the support contact, the restrictive element does not require an separate adjustment to allow it to adjust to any displacements of the support contact.

Furthermore, no extra connection between the optical element and the main frame is required other than the support contact.

Preferably, the mount comprises several such restrictive elements, each restrictive element being mechanically coupled to a different said strut. If several restrictive elements are used, any internal stress due to support of the restrictive elements present in the optical element is spread over several locations, thereby reducing the overall influence of the stress on the properties of the optically active surface. Also, since the support is spread over several struts, small support contacts may be allowed for, which reduces stress that may occur at a contact surface of the support contact due to temperature variations.

Moreover, a first said restrictive element may be arranged to restrict displacement of the optical element with respect to the main frame in at least a first said direction and a second said restrictive element may be arranged to restrict displacement of the optical element with respect to the main frame in at least a second said direction, the first direction and the second direction differing from each other. By choosing the first and the second direction different from each other, good positioning of the optical element with respect to the main frame of the mount is possible, while retaining the possibility of relieving the optical element of certain stress components.

A further modification of this embodiment is possible, wherein a third said restrictive element is provided, which is arranged to restrict displacement of the optical element with respect to the main frame in at least a third said direction which differs from the first and second directions, wherein the displacement allowed by the first, second and third restrictive elements at least nearly define a central point, the first, second and third directions being tangential directions with respect to the central point. An advantage of such a modification may be that the mirror segment is maintained centered, while thermal expansion is being allowed. Furthermore, owing to the restriction in tangential directions, rotation of the mirror segment around the central point is well-restricted.

In order to allow the struts to determine the positioning of the optical element with respect to the main frame in a direction perpendicular to the optically active surface, the mount is provided, wherein at least one said restrictive element is arranged to allow displacement of the optical element with respect to the main frame in any direction substantially perpendicular to the first direction, thereby including a direction substantially perpendicular to the optically active surface.

In such an embodiment the resilient element may comprise one or more oblong legs mechanically coupled to the support contact for allowing displacement of the contact with respect to the main frame in any direction substantially perpendicular to the first direction. Such geometry suitably allows for translation in two perpendicular directions, as well as rotation in two perpendicular directions.

For spreading the support load from a limited number of support nodes to a larger number of support contacts, the mount may comprise one or more strut frames, each of the strut frames being provided with at least one said strut, wherein some of the strut frames are provided with at least one subframe on which two or more struts of the plurality of struts are located. The strut frames provided with the at least one subframe preferably comprise a strut for supporting each of the at least one subframe.

The invention will be described in further detail with reference to the drawings, in which
Figure 1 shows a mirror having mirror segments which can be positioned using a mount according to the present invention;
Figure 2 is a perspective view of an embodiment of a mount according to the present invention;
Figure 3 is another perspective view showing the subframes and the struts of the mount shown in Figure 2;
figure 4 is yet another perspective view showing the subframes and the struts of the mount shown in Figure 2;
Figure 5 is a side view of the mount shown in Figure 2;
Figures 6A and 6B are a top views of a resilient element of the mount shown in Figure 2;
Figures 6C and 6D are side views of the resilient element shown in Figures 6A and 6B.

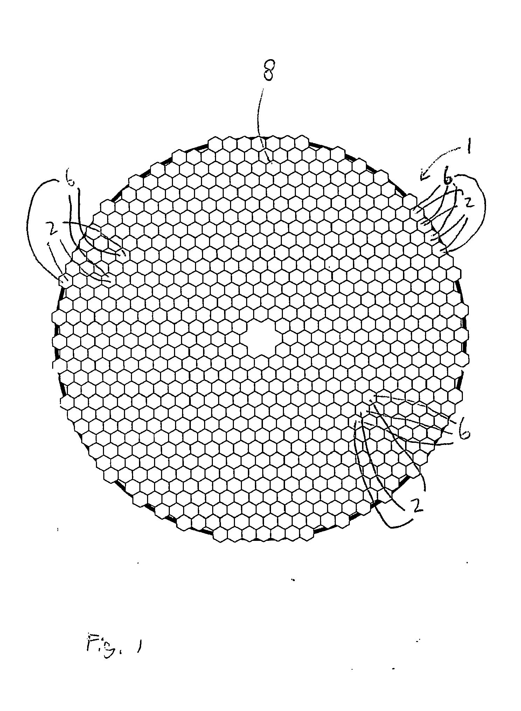

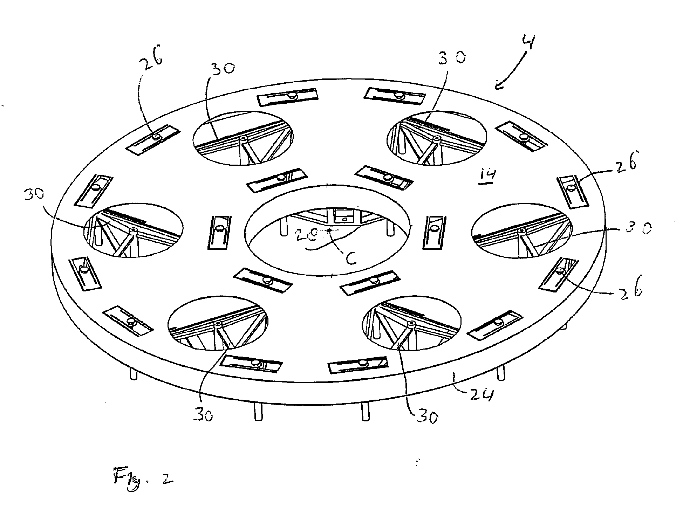

Figure 1 shows a mirror 1 having mirror segments 2 which can be positioned using a mount 4 (see Figure 2) according to the present invention. Each of the mirror segments 2 have a reflective surface 6. In order to form a mirror having suitable optical properties, it is desirable that the mirror segments 2 are positioned in such a manner that the reflective surfaces 6 of each of the segments are positioned such that they form an at least nearly continuous reflective plane 8. An example of such mirror segments 2 are segments manufactured from Zerodur®, which is a glass ceramic. The segments 2 may be polished and coated with a layer of reflective aluminium. Accuracy of the positioning of the mirror segments 2 in a translational direction perpendicular to the reflective surfaces 6 and of the rotational positioning with respect to an axis parallel to the reflective surfaces 6 are, therefore, quite relevant for the imaging quality of the mirror 1. The segments 2 are, in this example, hexagonal. However, other geometries may be used without the suitability for application of the invention being affected.

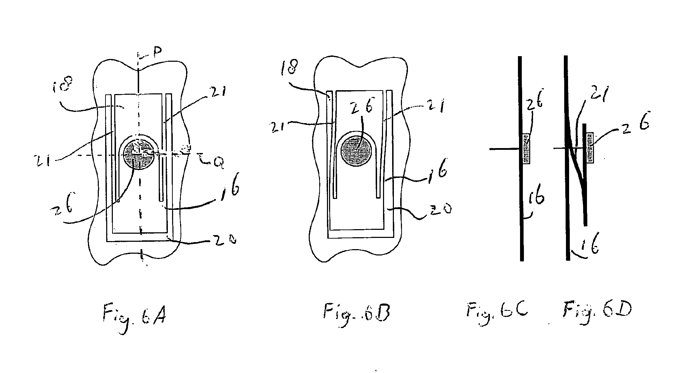

Figures 2, 3 and 4 illustrate in perspective view an embodiment of the mount 4. The mount 4 comprises a main frame 10 having an actuator frame 12 and a support plate 14, in which material has been cut out in order to form restrictive elements 16. As can be seen in Figures 6A and 6B, the material has been cut out at two different locations 18 and 20 in order to form one of the restrictive elements 16. Each of the restrictive elements 16 comprises substantially parallel legs 21 mechanically coupled to the support contact for allowing displacement of the contact with respect to the main frame in any direction substantially perpendicular to the longitudinal direction of the legs 21 and restricting displacement of the mirror in a direction parallel to the longitudinal direction of the legs 21. In Figures 6C and 6D, it can be seen that the restrictive elements 16 allow for displacement in a direction parallel to the support plate.

It can be seen in Figure 2 that in this embodiment the legs 21 of each of the restrictive elements 16 allow for displacement of the mirror segment with respect to the main frame 10 in different radial directions and restrict displacement of the mirror segment with respect to the main frame 10 in different tangential directions. Furthermore, a person skilled in the art will recognise from Figure 2 that rotation with respect to an axis P and an axis Q are also possible.

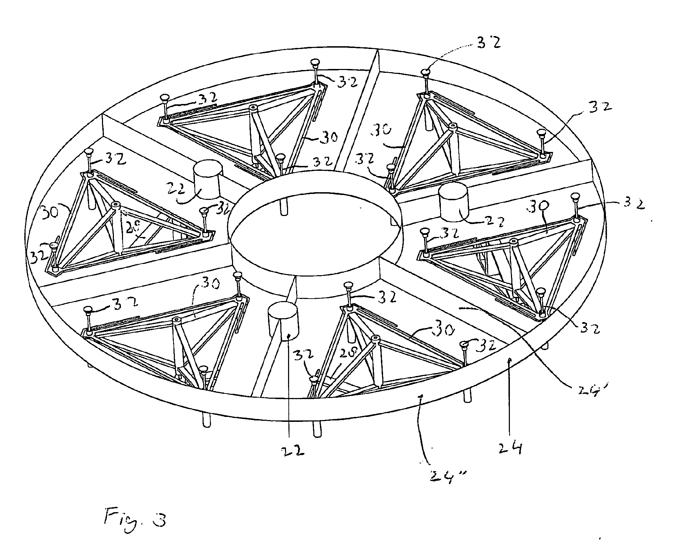

Furthermore, the support plate 14 comprises mounting hubs 22, a spacer 24 having, in this example, radially extending portions 24' and a circumferentially extending portion 24" (see Figure 3). As can be seen in Figure 3, in this example, the hubs 22 are integrally comprised the radially extending portion 24' and are configured to be mounted on the actuator frame 12 of the main frame 10.

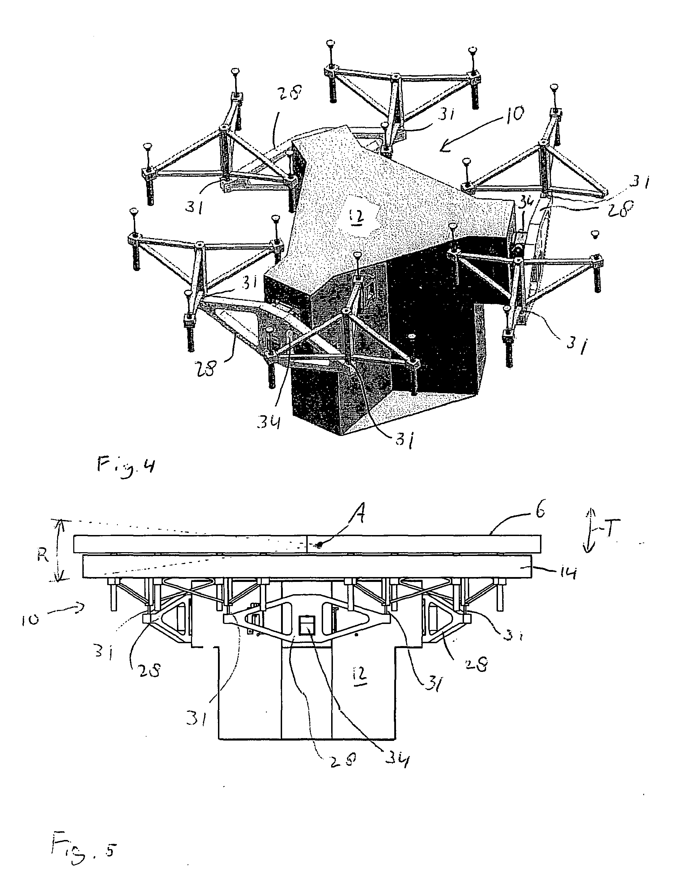

The mount 4 comprises connection pads 26 which, in use, form support contacts between the mount and the mirror segment 2 and the mount 4. The mount 4 further comprises three strut frames 28 (see Figure 4). The coefficient of thermal expansion of the connection pads 26 preferably match the coefficient of thermal expansion of the mirror to be used. Each of the strut frames 28 is mechanically coupled to two subframes 30 through respective subframe struts 31. Each of the subframes 30 has three struts 32. The actuator frame 12 is provided with actuators 34 for positioning the respective strut frame 28, its two subframes 30 and the struts 32 in a longitudinal direction L of the struts 32. The actuator is, in this example, formed by a cantilever 34 mounted on the actuator frame 12 using a hinge (the hinge not being shown in the drawings). As a person skilled in the art will deduce from Figure 3, the struts 32 are located to support the mirror segment 2 at the connection pads 26. Preferably, the struts 32 are connected to the connection pads 26.

In use, the mount works as follows. For positioning the mirror segment 2 in a translational direction T perpendicular to the reflective surface 6 of the mirror segment, each of the actuators 34 translates the strut frames over a distance which is equal for all the actuators 34. As a consequence, the mirror segment 2 is positioned mainly in a translational manner, since the struts 32 and therefore the connections pads 26 remain mainly static with respect to each other.

For positioning the mirror segment 2 in a rotational direction R with respect to an axis A parallel to the reflective surface 6, each of the actuators 34 translates the strut frames 28 over a distance which is different for the actuators 34. Since the actuators 34 as well as the connection pads 26 are translated with respect to each other, the mirror segment 2 and the reflective surface 6 rotate with respect to an axis parallel to the reflective surface 6. Thus, the positioning of the mirror segment 2 in the directions mentioned above can be effected.

In order to prevent vibrations to interfere with the proper functioning of any optical system in which the mount 4 and the mirror segment 2 are comprised, and further to be able to keep the mirror 1 intact, the mirror segments 2 are also supported in directions which, in optical sense, are of less relevance. Such directions are the translational directions parallel to the reflective surface 6 of the mirror segment 2 and the rotational direction with respect to an axis perpendicular to the reflective surface 6 of the mirror segment 2. To maintain positioning of the mirror segments 2 in these directions, the mirror segment 2 is supported by the restrictive elements 16. By supporting the mirror segment 2 at different locations, any internal stress present in the mirror segment is limited per restrictive element 16. The displacement allowed for by the restrictive elements 16 in this example define a central point C. Each of the restrictive elements is arranged to restrict displacement of the optical element with respect to the central point C in a tangential direction of the mirror segment 2. Furthermore, the amount of internal stress caused by a difference in thermal expansion coefficient of the mirror segment 2 and the support plate 14 is reduced by the fact that each of the restrictive elements 16 allow for displacement in a radial direction with respect to the central point. The mirror segment 2 is therefore allowed to expand radially while it remains centred around the central point.

It will be clear to a person skilled in the art that the invention is not limited to the embodiment described above. For instance, another number of struts may be used or another amount of actuators. Furthermore, different kinds of actuators may be used without deviating from the invention. It may for instance be possible to use pressure controlled actuators having a pressure chamber for providing a unidirectional actuation through deformation of the chamber.

## Claims

1. Mount for positioning an optical element, having one or more optically active surfaces, such as a mirror segment having a reflective surface, wherein the mount comprises a main frame and a plurality of struts, each of the struts being configured to support the optical element at a support contact and to restrict displacement of the support contact perpendicular to the optically active surface, wherein the mount comprises at least one restrictive element, wherein the at least one restrictive element is mechanically coupled to a said strut near the support contact and wherein each of the at least one restrictive element is arranged to restrict displacement of the optical element with respect to the main frame in a direction substantially parallel to the optically active surface and to allow for displacement of the optical element with respect to the main frame in another direction substantially parallel to the optically active surface.

2. Mount according to claim 1, wherein the mount comprises several such restrictive elements, each restrictive element being mechanically coupled to a different said strut.

3. Mount according to claim 2, wherein a first said restrictive element is arranged to restrict displacement of the optical element with respect to the main frame in at least a first said direction and wherein a second said restrictive element is arranged to restrict displacement of the optical element with respect to the main frame in at least a second said direction, the first direction and the second direction differing from each other.

4. Mount according to claim 3, wherein a third said restrictive element is provided, which is arranged to restrict displacement of the optical element with respect to the main frame in at least a third said direction which differs from the first and second directions, wherein the displacement allowed by the first, second and third restrictive elements at least nearly define a central point, the first, second and third directions being tangential directions with respect to the central point.

5. Mount according to any one of claims 2-4, wherein the first restrictive element is arranged to allow displacement of the optical element with respect to the main frame in any direction substantially perpendicular to the first direction.

6. Mount according to claim 5, wherein the restrictive element comprises one or more oblong legs for restricting displacement in the longitudinal directions of the legs and for allowing displacement in any direction perpendicular to the legs.

7. Mount according to claim 6, wherein the legs are mechanically coupled to the support contact for allowing displacement of the contact with respect to the main frame in any direction substantially perpendicular to the first direction.

8. Mount according to any one of the preceding claims, wherein at least a part of the restrictive elements is comprised in a support plate.

9. Mount according to any one of the preceding claims, wherein the mount comprises one or more actuators for actuating the strut frames in a longitudinal direction of the struts with respect to the main frame.

10. Optical system, such as a telescope, comprising a mount according to any one of the preceding claims.
